Europäisches Patentamt

European Patent Office

Office européen des brevets

(11) Publication number: **0 063 435**
**B1**

(12) **EUROPEAN PATENT SPECIFICATION**

(45) Date of publication of patent specification: **29.01.86**

(51) Int. Cl.⁴: **G 01 N 30/90**

(21) Application number: **82301731.4**

(22) Date of filing: **01.04.82**

(54) Chromatographic method for the detection of drugs.

(30) Priority: **20.04.81 US 255519**

(43) Date of publication of application:
**27.10.82 Bulletin 82/43**

(45) Publication of the grant of the patent:
**29.01.86 Bulletin 86/05**

(84) Designated Contracting States:
**AT BE CH DE FR GB IT LI LU NL SE**

(56) References cited:
**GB-A-2 019 241**

**E. STAHL "Dünnschichtchromatographie", 2nd edition, 1967 SPRINGER-VERLAG, Berlin-Heidelberg-New York pages 49, 50**

(73) Proprietor: **MARION LABORATORIES INC**
**9221 Ward Parkway**
**Kansas City Missouri 64114 (US)**

(72) Inventor: **Jones, Donald W.**
**511 Chino Canyon Road**
**Palm Springs California 92262 (US)**

(74) Representative: **Myerscough, Philip Boyd et al**
**J.A.Kemp & Co. 14, South Square Gray's Inn**
**London, WC1R 5EU (GB)**

Courier Press, Leamington Spa, England.

# Description

The present invention is concerned with an improved method of visualizing drugs employing thin layer chromatography. Many of the reagents employed for visualizing a drug on a chromatograph are unstable and must be freshly or frequently prepared. This can be a time consuming job and create inefficiencies in the clinical laboratory.

The problem of unstable reagents is exemplified by Mandelin's reagent, which is known for use in the detection of alkaloids, or basic amine-containing drugs. Mandelin's reagent turns green on standing. Preparation of fresh batches can result in batch-to-batch variations, with variations in the resulting colours. Thus, comparison with photographic standards is difficult.

Thin-layer chromatography is a versatile and economical method for the detection of a wide variety of drugs in physiological media. One particular technique is described in US—A—3,714,035, involving a chromatographic plate with a plurality of scored areas into which are introduced one or more sample discs and standardized discs having a known amount of specific drugs. By developing the sample and standards simultaneously one can compare the sample spots to the standard spots and make an accurate determination of whether a specific drug is present and, if present, the amount thereof.

An improvement to this technique is described in US—A—3,963,421, which describes an improved method of extracting the sample.

According to the invention there is provided a method for the detection of a drug in a physiological medium, which comprises extracting the drug from the physiological medium, transferring the drug onto a thin layer chromatographic plate comprising an inert substrate and a thin layer of absorbent material, developing the plate with a development solution and exposing the developed plate to a detection reagent to produce a visual response characteristic of said drug, characterised in that the drug is a basic amine-containing drug, the layer of absorbent material is impregnated with a water-soluble pentavalent vanadium salt and the detection reagent is concentrated sulferic acid.

In a preferred embodiment, a pentavalent vanadium salt of Mandelin's reagent is impregnated in the absorbent material (e.g. silica gel) on a chromatographic plate. Adsorbent discs are prepared and placed on the plate, and the plate is developed in the known manner, described hereinabove. The detection of colour spots may then be accomplished by exposing the chromatographic plates to concentrated sulphuric acid. Thus, the necessity of preparing Mandelin's reagent at the time of assay has been eliminated.

The thin-layer chromatographic technique of the present invention involves the five basic steps common to all thin-layer chromatographic analysis. The steps are: (1) extraction of a drug from a physiological sample, (2) concentration of the drug, (3) transfer of the concentrated drug to a chromatographic plate, (4) development of the plate, and (5) detection of the drug on the plate by visualization of the drug using a specific detection reagent. The invention lies in the manner of visualizing the drug samples after chromatographing. Each step of the technique will be described in connection with the detection of basic amine-containing drugs where Mandelin's reagent is the detection reagent.

Normally, the physiological sample will be either urine or serum, depending upon the drug of interest. The sample is introduced into an extraction vessel containing a salt-halocarbon organic extractant solvent system which is typically granular sodium tungstate or molybdate for basic and neutral drugs. The organic extractant, which preferentially dissolves the drugs of interest, is of lower density than the final aqueous solution and it may be conveniently separated therefrom. Once separated, drugs may be incrementally transferred to a small absorbent disc from which the organic solvent is evaporated.

A thin-layer chromatographic plate is employed which has a substantially inert substrate, e.g. a glass fibre, which can withstand sulphuric acid treatment and will not interfere with the development of the chromatographic plate. The adsorbent will usually be silica gel, but other adsorbents may also find application, such as alumina. The chromatographic plate will typically have one or more scored areas which are aligned adjacent one end of the chromatograph, although the detection technique will work equally well for plates which do not include the scored areas of US—A—3,714,037, described hereinabove. One of the scored areas is for receiving the sample adsorbent disc prepared as described above. The other scored areas receive "standardized" discs which have known amounts of specific drugs.

The chromatograph is developed by placing the end adjacent the scored areas in a small amount of developing solution. As the devloping solution moves up the chromatograph, the various drugs will migrate from the discs upward with the developing solution. After a sufficient time for development, the chromatographic plate is removed from the solution and the solution is allowed to evaporate to leave a drug chromatographic plate.

After development, it is necessary to treat the chromatographic plate to detect or visualize the progression of the drugs along the chromatographic plate. By comparing the spots of the sample, as to size and colour, with the spots of the standards, one can make a semi-quantitative determination of the approximate amount of a particular drug in the sample.

As described hereinabove, basic amine-containing drugs are detected by exposing the chromatographic plate to Mandelin's reagent, comprising a pentavalent vanadium salt in concentrated sulphuric acid. The problems associated with Mandelin's reagent were also set forth previously. In accordance with the present invention, the excellent developing characteristics of Mandelin's reagent are achieved by applying concentrated sulphuric acid to a chromatographic plate impregnated with a sufficient concentration of a wafer-soluble pentavalent vanadium salt.

A vanadium-impregnated plate can be prepared by exposing silica gel, conveniently supported by a glass fibre support, to the vandium salt solution. Individual frames of the paper may be dipped in the vanadium solution or a continuous web of the paper passed through the solution. At convenient vanadium concentrations, an exposure time of several seconds has been found adequate to obtain the necessary concentration of vanadium salt on the plate. After drying, the vanadium-impregnated paper web may be cut up into chromatographic plates.

Various water soluble pentavalent vanadium salts may be used. Of particular interest in the present invention are vanadium pentoxide ($V_2O_5$) and ammonium metavanadate ($NH_4VO_3$). Ammonium metavanadate is the vanadium salt typically used in making Mandelin's reagent. The vanadium solutions employed are aqueous and of a vanadium salt concentration in the range of from approximately 0.02 to 1.0 weight/volume percent, with a preferred range of from approximately 0.08 to 0.1 weight/volume percent.

The detection of drugs on the vanadium-impregnated chromatographic paper is achieved by exposing the chromatographic plate to concentrated sulphuric acid. Typically, the plate will be dipped in the concentrated sulphuric acid, although spraying the plate with a mist of sulphuric acid is also possible.

## Claims

1. A method for the detection of a drug in a physiological medium, which comprises extracting the drug from the physiological medium, transferring the drug onto a thin layer chromatographic plate comprising an inert substrate and a thin layer of absorbent material, developing the plate with a development solution and exposing the developed plate to a detection reagent to produce a visual response characteristic of said drug, characterised in that the drug is a basic amine-containing drug, the layer of absorbent material is impregnated with a water-soluble pentavalent vanadium salt and the detection reagent is concentrated sulfuric acid.

2. A method according to claim 1, wherein the adsorbent material has been impregnated by exposing the chromatographic plate to an aqueous solution of the vanadium salt having a concentration of from 0.02 to 1.0 weight/volume percent.

## Patentansprüche

1. Verfahren zum Nachweis eines Arzneimittels in einem physiologischen Medium, durch Extrahieren des Arzneimittels aus dem physiologischen Medium, Überführen des Arzneimittels auf eine dünnschichtchromatographische Platte, die ein inertes Substrat und eine dünne Schicht aus Absorbensmaterial umfasst, Entwickeln der Platte mit einer Entwicklungslösung und Behandeln der entwickelten Platte mit einem Bestimmungsreagens, zur Erzielung einer sichtbaren Reaktion, die für das Arzneimittel charakteristisch ist, dadurch gekennzeichnet, dass das Arzneimittel ein basisches Amin enthaltendes Arzneimittel ist, die Schift aus Absorbenmaterial mit einem wasserlöslichen fünfwertigen Vanadiumsalz imprägniert ist, und das Bestimmungsreagens konzentrierte Schwefelsäure ist.

2. Verfahren nach Anspruch 1, bei dem das Absorbensmaterial durch Behandeln der chromatographischen Platte mit einer wässerigen Lösung des Vanadiumsalzes, mit einer Konzentration von 0,02 bis 1,0 Gew./Vol.-%, imprägniert wurde.

## Revendications

1. Procédé pour la détection d'une drogue ou médicament dans un milieu physiologique, qui consiste à extraire la drogue du milieu physiologique, a transférer la drogue sur une plaque chromatographique à couche mince constituée d'un substrat inerte et d'une mince couche d'un matériau absorbant, à développer la plaque avec une solution de développement et à exposer la plaque développée à un réactif de détection pour produire une réponse visuelle caractéristique de la drogue, ce procédé étant caractérisé en ce que la drogue est une drogue contenant une amine basique, la couche de matériau absorbant est imprégnée avec un sel de vanadium pentavalent, soluble dans l'eau, et le réactif de détection est de l'acide sulfurique concentré.

2. Procédé selon la revendication 1, dans lequel le matériau absorbant a été imprégné en exposant la plaque chromatographique à une solution aqueuse du sel de vanadium ayant une concentration de 0,02 à 1,0% en poids/volume.